# DEMANDE DE BREVET EUROPEEN

(11) **EP 4 446 962 A1**
(43) Date de publication de la demande: **16.10.2024**
(21) Numéro de dépôt: 23315080.4
(22) Date de dépôt: 14.04.2023
(51) Int. Cl.: G06Q 10/08, G07F 11/62, G07F 11/42, G07F 11/58, G07F 11/26, B65B 5/08

(54) **SYSTÈME ET PROCÉDÉ DE COLISAGE**

(71) Demandeur: Ciret, Anthony, 45330 Le Malesherbois (FR); Didelot, Guillaume, Montréal, QC H3E1C8 (CA)
(72) Inventeur: Ciret, Anthony, 45330 Le Malesherbois (FR); Didelot, Guillaume, Montréal, QC H3E1C8 (CA)
(74) Mandataire: Fabiani, Marie-Hélène

(57) **Abrégé**

La présente invention concerne un système et un procédé de colisage pour la préparation automatisée de colis (9) à partir de produits (8) stockés dans un rayonnage comprenant au moins une armoire (10) de stockage,
caractérisé en ce que :
ladite armoire (10) comporte une pluralité de rayons (11) munis chacun d'une motorisation (12) et dans lesquels sont stockés lesdits produits (8), ladite motorisation (12) étant apte à délivrer les produits (8) un par un vers au moins un convoyeur (13, 14) muni d'une motorisation (16) acheminant les produits (8) récoltés sur le convoyeur (13, 14) vers un aiguilleur (15) apte à pousser les produits (8) successifs présents sur le convoyeur (13) vers au moins un colis (9) apte à recevoir lesdits produits,
ledit système comporte une unité de contrôle (2) configuré pour recevoir une commande d'un client identifiant une pluralité de produits sélectionnés parmi ceux stockés dans le système et contrôler, de manière combinée, les motorisations (12, 16) et l'aiguilleur (15) pour récupérer lesdits produits sélectionnés depuis leur emplacement de stockage dans les rayons (11) et les collecter dans au moins un colis (9)

## Description

La présente invention concerne les domaines du rayonnage et du colisage en général.

En particulier, la présente invention concerne un système de colisage permettant de préparer un colis comprenant une pluralité de produits stockés dans divers compartiments d'un rayonnage.

Il existe dans les domaines du rayonnage et du colisage au moins un problème qui concerne la préparation de colis à partir d'une pluralité de produits stockés dans dives compartiments d'un rayonnage. En effet, lors d'une commande de produits par un client, il peut être nécessaire de récupérer plusieurs produits à divers endroits et de les collecter à un point de récupération.

Il est connu dans l'art antérieur divers distributeurs automatiques, par exemple de produits comestibles ou potables, sous la forme d'armoire comprenant plusieurs étagères contenant des rayons à hélices motorisés et/ou à tapis roulant, délivrant les produits sélectionnés dans un point de collecte de l'armoire. Ce type de solution présente en outre l'inconvénient d'être limité en termes de nombre et donc de variétés possibles de produits stockés et récupérables. Par ailleurs, il est également connu dans l'art antérieur des systèmes de préparation de commande utilisant des robots sophistiqués et coûteux permettant de collecter plusieurs produits dans divers compartiments de stockage et de les délivrer à un point de collecte du robot. Par exemple, dans les pharmacies, il est connu des systèmes dans lesquels le pharmacien saisit les médicaments à collecter et des robots qui récupère ces médicaments automatiquement dans les compartiments d'un rayonnage pour les délivrer à un point de collecte accessible par le pharmacien. Ce type de solution présente en outre les inconvénients d'être coûteux et de ne pas être flexible en termes d'agencement et d'évolution du nombre de rayons. D'autre part, toutes ces solutions connues de l'art antérieur présentent également l'inconvénient de ne pas permettre un colisage automatisé et de ne délivrer les produits qu'un seul point de collecte unique, avec un fonctionnement séquentiel produit par produit.

Un but de la présente invention est de pallier au moins certains inconvénients de l'art antérieur en proposant un système de colisage permettant la préparation automatique de colis, de préférence plusieurs à la fois, à partir d'une pluralité de produits stockés dans divers compartiments d'un rayonnage.

Ce but est atteint par un système de colisage pour la préparation automatisée de colis à partir de produits stockés dans un rayonnage comprenant au moins une armoire de stockage, caractérisé en ce que :
ladite armoire comporte une pluralité de rayons munis chacun d'une motorisation et dans lesquels sont stockés lesdits produits, ladite motorisation étant apte à délivrer les produits un par un vers au moins un convoyeur muni d'une motorisation acheminant les produits récoltés sur le convoyeur vers un aiguilleur apte à pousser les produits successifs présents sur le convoyeur vers au moins un colis apte à recevoir lesdits produits,
ledit système comporte une unité de contrôle configuré pour recevoir une commande d'un client identifiant une pluralité de produits sélectionnés parmi ceux stockés dans le système et contrôler, de manière combinée, les motorisations et l'aiguilleur pour récupérer lesdits produits sélectionnés depuis leur emplacement de stockage dans les rayons et les collecter dans au moins un colis.

Selon une autre particularité, l'aiguilleur est :
- disposé en regard d'une pluralité d'emplacements de collecte dans chacun desquels est disposé un colis apte à recevoir au moins un produit ;
- configuré pour pousser successivement les produits sélectionnés d'une commande déterminée dans l'un des colis de la pluralité d'emplacements et les produits sélectionnés d'une autre commande déterminée dans un autre colis de la pluralité d'emplacements.

Selon une autre particularité, plusieurs armoires délivrent les produits sur un même convoyeur.

Selon une autre particularité, plusieurs convoyeurs, dits collecteurs, collectant les produits d'une ou plusieurs armoires, délivrent les produits sur un convoyeur, dit distributeur, sur lequel est configuré ledit aiguilleur permettant la convergence des produits de plusieurs armoires et de plusieurs convoyeurs collecteurs vers au moins un colis en regard d'un même aiguilleur.

Selon une autre particularité, ledit aiguilleur comporte un bras directionnel formant un plan d'aiguillage perpendiculaire au plan dudit convoyeur, ledit plan d'aiguillage étant pivotant autour d'un axe perpendiculaire au plan dudit convoyeur, grâce à une motorisation du bras directionnel, pour incliner le plan d'aiguillage d'un angle variable par rapport au sens d'avancement dudit convoyeur et ainsi pousser les produits vers divers emplacements de collecte en fonction de l'angle du plan d'aiguillage.

Selon une autre particularité, ledit aiguilleur comporte une seconde motorisation pour translater ledit plan d'aiguillage parallèlement au sens d'avancement dudit convoyeur, ladite motorisation pour le pivotement du plan d'aiguillage étant configuré pour une pivotement de plus de quatre-vingt-dix degrés, permettant d'incliner le plan d'aiguillage alternativement vers un bord latéral ou l'autre dudit convoyeur, afin de pousser les produits vers une pluralité d'emplacements de collecte situés de part et d'autre dudit convoyeur.

Selon une autre particularité, ledit aiguilleur comporte une pluralité de moteurs translatant chacun une pelle d'aiguillage perpendiculairement au sens d'avancement dudit convoyeur, l'unité de contrôle pilotant l'actionnement de chacun de ces moteurs et pelles d'aiguillage disposés en regard chacun d'un emplacement de collecte des produits, pour pousser les produits successifs vers l'emplacement approprié par le moteur approprié.

Selon une autre particularité, ladite unité de contrôle exécute un logiciel de commande de produits permettant à un client, via une interface homme-machine, de sélectionner une pluralité de produits à commander, ladite unité de contrôle déterminant, sur la base de cette commande de produits, les emplacements de stockage des produits, au moins un emplacement de collecte et la séquence d'actionnement des motorisations et de l'aiguilleur pour l'acheminement des divers produits vers au moins un colis.

Selon une autre particularité, l'interface homme machine est exécutée sur un dispositif informatique du client, connecté à ladite unité de contrôle par un réseau de communication.

Selon une autre particularité, l'interface homme machine est réalisée par la coopération entre au moins un dispositif informatique du client et au moins un serveur, via au moins un réseau de communication, ledit serveur communiquant également avec ladite unité de contrôle pour lui transmettre la commande demandée par le client.

Un autre but de la présente invention est de proposer un procédé de colisage palliant au moins un des inconvénients de l'art antérieur.

Ce but est atteint par un procédé de colisage pour la préparation automatisée de colis à partir de produits stockés dans un système selon divers modes de réalisation de l'invention, caractérisé en ce qu'il comporte au moins une sélection d'au moins un produit par un utilisateur via une interface homme-machine, suite à laquelle l'unité de contrôle réalise au moins une itération de :
- définition d'au moins un emplacement de stockage correspondant à ladite sélection de produit(s) ;
- calcul du volume et éventuellement du poids correspondant à ladite sélection de produit(s) ;
- définition d'au moins une destination correspondant à au moins un emplacement de collecte capable d'accueillir ladite sélection de produit(s) ;
- définition de l'acheminement nécessaire depuis chaque emplacement de stockage jusqu'à chaque emplacement de collecte pour chaque produit de ladite sélection ;
- pilotage des motorisations du système pour effectuer ledit acheminement.

Un autre but de la présente invention est de proposer un programme d'ordinateur palliant au moins un des inconvénients de l'art antérieur.

Ce but est atteint par un programme d'ordinateur caractérisé en ce que son exécution sur des moyens informatiques d'un système selon divers modes de réalisation de l'invention permette la mise en oeuvre dudit procédé de colisage.

D'autres particularités et avantages de la présente invention apparaîtront plus clairement à la lecture de la description de divers modes de réalisation ci-après, faite en référence aux dessins annexés, dans lesquels :
[Fig 1] la figure 1 représente une vue en perspective d'un système de colisage selon divers modes de réalisation ;
[Fig 2A] la figure 2A représente une vue de dessus d'un système de colisage selon divers modes de réalisation ;
[Fig 2B] la figure 2B représente une vue de dessus d'un système de colisage selon divers modes de réalisation ;
[Fig 3A] la figure 3A représente une vue de dessus d'un système de colisage selon divers modes de réalisation ;
[Fig 3B] la figure 3B représente une vue de dessus d'un système de colisage selon divers modes de réalisation ;
[Fig 4] la figure 4 représente une vue schématique d'un système de colisage selon divers modes de réalisation ;
[Fig 5A] la figure 5A représente une vue de profil d'une armoire d'un système de colisage selon divers modes de réalisation ;
[Fig 5B] la figure 5B représente une vue schématique d'un procédé de colisage selon divers modes de réalisation.

La présente invention concerne un système de colisage pour la préparation automatisée de colis (9) à partir de produits (8) stockés dans un rayonnage. L'invention s'applique à tout type de produits, quel que soit leur constitution ou leur composition, qu'ils soient ou non comestibles ou potables. L'invention est particulièrement appropriée pour des produits d'un poids inférieur à deux kilogrammes et d'un volume inférieur à 0,3 mètre cube, mais elle peut être dimensionnée (au niveau de ses dimensions et de la force des motorisations) pour des produits de taille et/ou poids plus importants. De même, l'invention peut également être dimensionnée pour diverses tailles de colis (9) (contenants ou emballages pour vente, transport ou fret) et l'invention, qui prévoit en outre de dimensionner les colis (9) en fonction du type de produits (8) et du nombre de produits à collecter dans un même colis (« coliser »), permet notamment de réaliser de manière automatique ces manipulations visant à regrouper divers produits dans divers colis.

D'une manière générale, la présente invention comporte de préférence au moins une armoire (10) de stockage comprenant une pluralité de rayons (11) munis, chacun d'une motorisation (12) et dans lesquels sont stockés lesdits produits (8), ladite motorisation (12) étant apte à délivrer les produits (8) un par un vers au moins un convoyeur (13, 14) muni d'une motorisation (16) acheminant les produits (8) récoltés sur le convoyeur (13, 14) vers un aiguilleur (15) apte à pousser les produits (8) successifs présents sur le convoyeur (13) vers au moins un colis (9) apte à recevoir lesdits produits. Ce système comporte une unité de contrôle (2) configuré pour recevoir une commande d'un client identifiant une pluralité de produits sélectionnés parmi ceux stockés dans le système et contrôler, de manière combinée, les motorisations (12, 16) et l'aiguilleur (15) pour récupérer lesdits produits sélectionnés depuis leur emplacement de stockage dans les rayons (11) et les collecter dans au moins un colis (9).

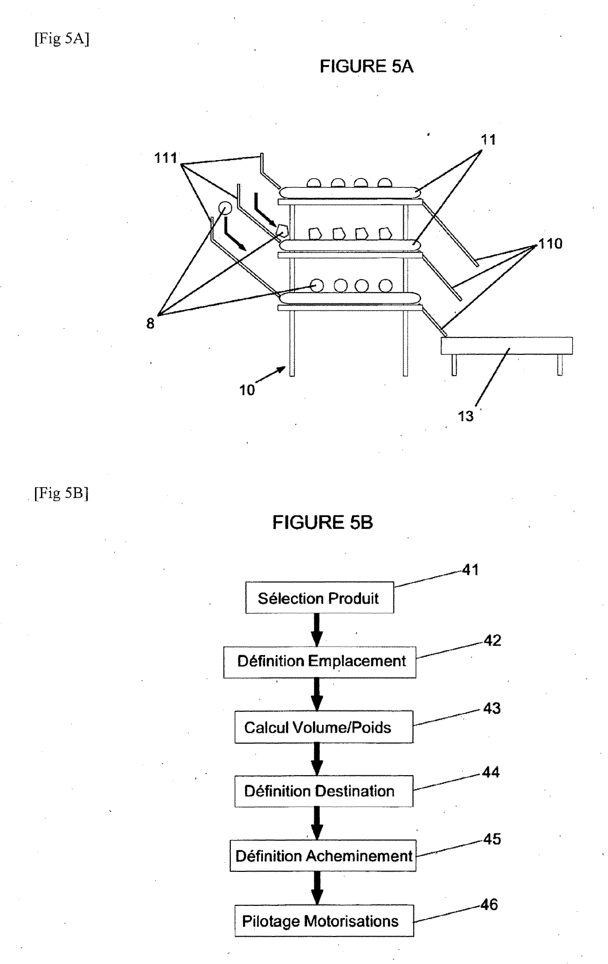

Le terme « armoire » est utilisé dans la présente description dans son acception désignant tout type de bâti comprenant une pluralité d'étagère, comme par exemple les distributeurs automatiques de produits qui comportent un châssis ou bâti comprenant plusieurs rayons sous la forme de rangées réparties sur plusieurs étages. Le terme « rayon » est utilisé dans la présente description pour désigner des emplacements de stockage de produits, en général sous forme de rangées de produits et le terme rayonnage désigne l'ensemble de ces emplacements gérés par le système. Ainsi, le rayonnage comprend par exemple une pluralité d'armoires à plusieurs étagères comprenant des rayons dans lesquels sont stockés les produits. Les termes « convoyeur » et « aiguilleur » sont utilisés dans la présente description dans leur son acception fonctionnelle. Le convoyeur désigne un moyen de déplacer /convoyer les produits et peut être un convoyeur à bande (ou tapis roulant) comme classiquement utilisé dans le domaine mais tout autre moyen à la portée de l'homme de métier peut être envisagé. L'aiguilleur désigne un moyen d'aiguiller, c'est-à-dire de répartir et acheminer les produits vers diverses destinations finales (en l'occurrence des colis dans lesquels ils doivent être collectés). Aucun de ces termes ne doivent donc pas être interprétés de façon limitative et c'est la définition fonctionnelle qui doit être retenue. De même, le terme « motorisation » n'implique aucune limitation et la motorisation d'un rayonnage peut par exemple être un moteur entraînant une hélicoïde dans lequel sont alignés plusieurs produits, comme largement connu des distributeurs automatiques mais il peut également s'agir d'un moteur entraînant un tapis (comme dans un convoyeur à bande par exemple). Cette configuration en tapis est d'ailleurs préférée aux hélicoïdes pour leur flexibilité en termes de dimensions et de contrôle d'avancement pour délivrer les produits. En effet, la présente invention, par sa configuration et son unité de contrôle (2), permet de contrôler l'avancement des produits à divers stades de leur colisage, depuis leur emplacement de stockage (ou point de stockage) jusqu'à leur emplacement de collecte (ou point de collecte), en contrôlant les moteurs pour les faire avancer ou s'arrêter et même éventuellement définir leurs vitesses. En contrôlant les divers moteurs en fonctions de points de stockage et de collecte, ainsi que la taille des produits, le système permet un colisage automatique à moindre coût et éventuellement avec une rapidité améliorée, par exemple par le colisage simultané de plusieurs colis dans le système. On notera que, dans certains modes de réalisation, les rayons (11) disposés à différents étages comportent des rampes (110) ou toboggans ou bavettes débouchant sur le ou les convoyeur(s) desservis par l'armoire (10) contenant ses rayons (11), de façon à ce que les produits puissent glisser au lieu de tomber violemment sur le convoyeur. D'autre moyens d'amortir la chute peuvent également être prévus. Par exemple comme illustré sur la Fig. 5A illustrative et non limitative, les rampes ont des longueurs variables en fonction de l'étage où se trouve le rayon dans l'armoire, pour guider les produits le plus près possible du convoyeur. D'autre part, dans certains modes de réalisation, les rayons (11) disposés à différents étages comportent des glissières (111) d'alimentation en produits, pour faciliter le remplissage des rayons. De plus, les rayons peuvent être équipés de capteurs de passage permettant de détecter l'arrivée d'un produit, par exemple via une telle glissière (111), sur le rayon (par exemple sur le tapis). De même, des capteurs de passage peuvent être prévus à la sortie du rayon pour confirmer la sortie des produits lors du colisage. Ces capteurs permettent également à l'unité de contrôle de compter les produits disposés dans les rayons et fournir une indication sur le remplissage des rayons. Une signalisation (comme par exemple au moins une LED) peut être prévue sur les rayons, par exemple sur chacun des rayons, pour indiquer le remplissage (par exemple une LED verte quand il est plein et/ou une orange quand il est à moitié vide et/ou une rouge quand il est vide). De plus, bien entendu, l'unité de contrôle peut également afficher sur une interface homme-machine, les quantités exactes de produits disponibles dans tous les rayons.

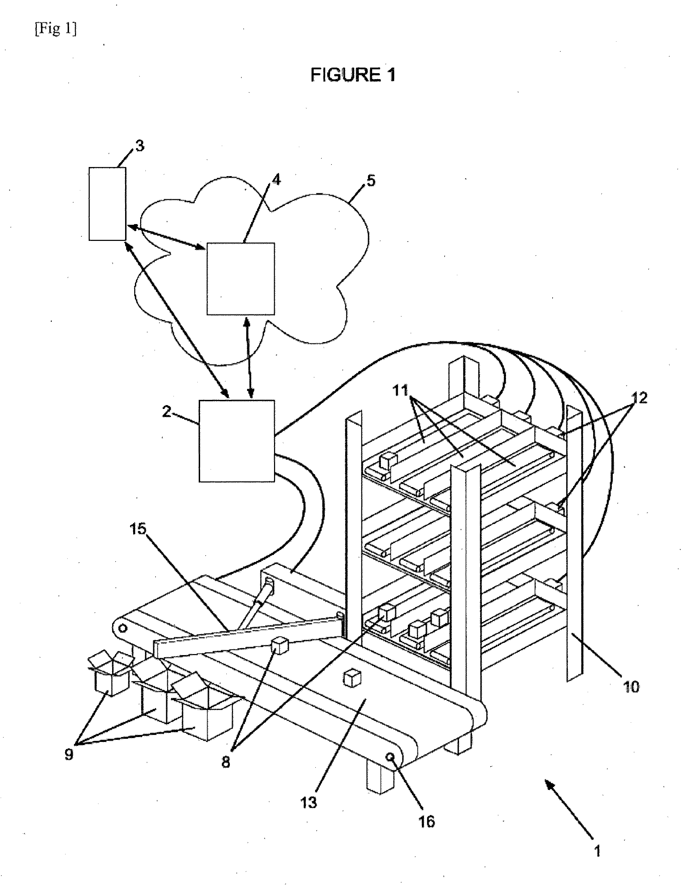

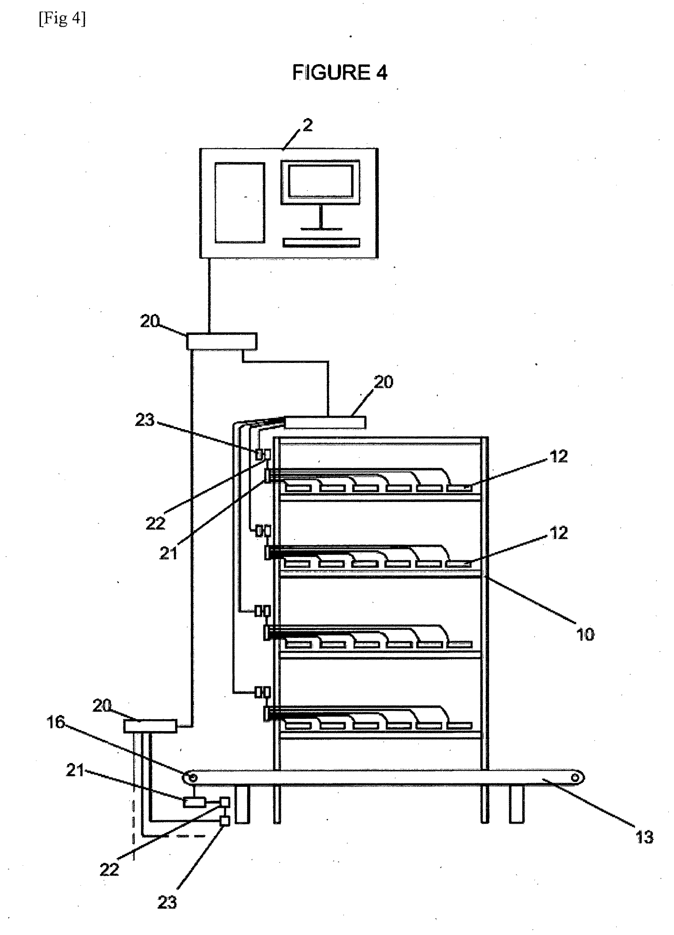

Le système prévoit diverses configurations possibles pour la commande et le colisage de produits, par exemple comme représenté sur la fig. 1 de manière illustrative et nullement limitative. Dans certains modes de réalisation, ladite unité de contrôle exécute un logiciel de commande de produits permettant à un client, via une interface homme-machine, de sélectionner une pluralité de produits à commander, ladite unité de contrôle déterminant, sur la base de cette commande de produits, les emplacements de stockage des produits, au moins un emplacement de collecte et la séquence d'actionnement des motorisations (12, 16) et de l'aiguilleur (15) pour l'acheminement des divers produits (8) vers au moins un colis (9). Dans certains de ces modes de réalisation, l'interface homme machine est exécutée sur un dispositif (3) informatique du client, connecté à ladite unité de contrôle (2) par un réseau (5) de communication. Dans d'autres modes de réalisation, l'interface homme machine est réalisée par la coopération entre au moins un dispositif (3) informatique du client et au moins un serveur (4), via au moins un réseau (5) de communication, ledit serveur (4) communiquant également avec ladite unité de contrôle (2) pour lui transmettre la commande demandée par le client. Ainsi, un client peut se connecter par internet, soit à un serveur de commande soit directement à l'unité de contrôle. De préférence, on distinguera la partie serveur avec l'interface pour passer commande de la partie contrôle pour piloter les composants du système motorisé. D'autre part, dans certains modes de réalisation, par exemple comme représenté sur la fig. 4 de manière illustrative et nullement limitative, l'unité de contrôle est un dispositif informatique local pilotant le système (sans forcément d'accès extérieur par des tiers connectés en réseau). On comprend qu'au niveau matériel, la configuration de la présente invention n'implique aucune limitation particulière. Les connexions seront de préférence filaires et de préférence des connexions réseaux avec des répartiteurs et contrôleurs (« switch ») adaptés, mais l'invention n'est pas limitée à ces exemples, notamment l'exemple de la figure 4 faisant apparaître divers matériels de connectique et contrôle. Les exemples fournis dans les figures pour les différentes caractéristiques techniques illustrées sont d'ailleurs combinables et intervertibles entre elles (en particulier lorsqu'il s'agit de caractéristique différentes). L'exemple de la figure 4 illustre les composants suivants : L'unité de contrôle est connectée aux autres éléments du système par un ou plusieurs répartiteurs (20), par exemple Ethernet, connecté(s) à des contrôleurs réseau (23) comme par exemple des cartes programmables (Arduino Ethernet par exemple) relié à des contrôleurs rayons (22) (par exemple des cartes Arduino) pilotant des cartes relais contrôlant les moteurs (12) dans les rayons (11) de chaque armoire (10). De plus, on peut prévoir au moins une lampe de réapprovisionnement et/ou au moins une lampe de recherche d'article ou de manque et/ou au moins un laser de passage à divers endroits entre le point de stockage et le point de collecte, afin de surveiller (automatiquement) le bon déroulement des opérations.

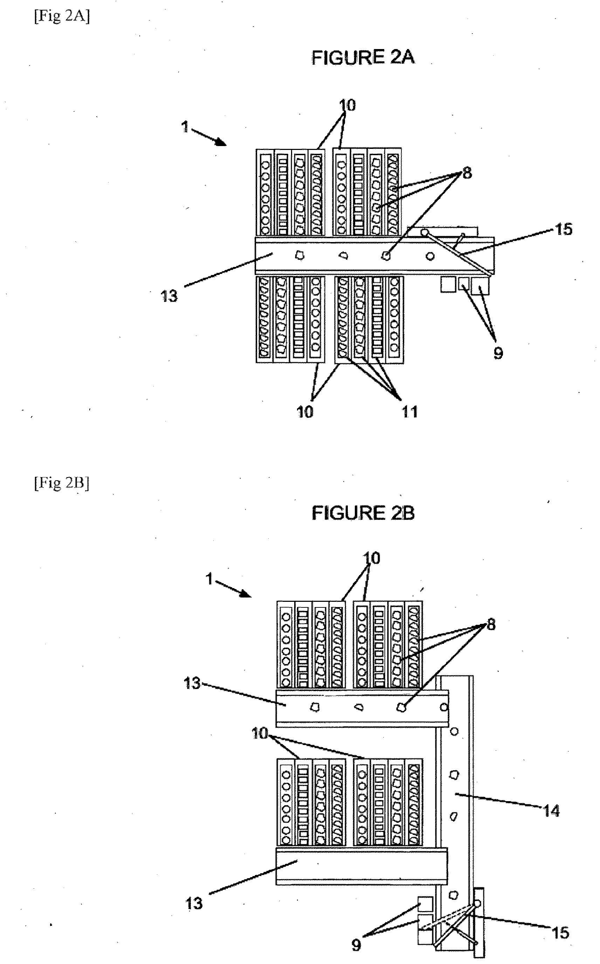

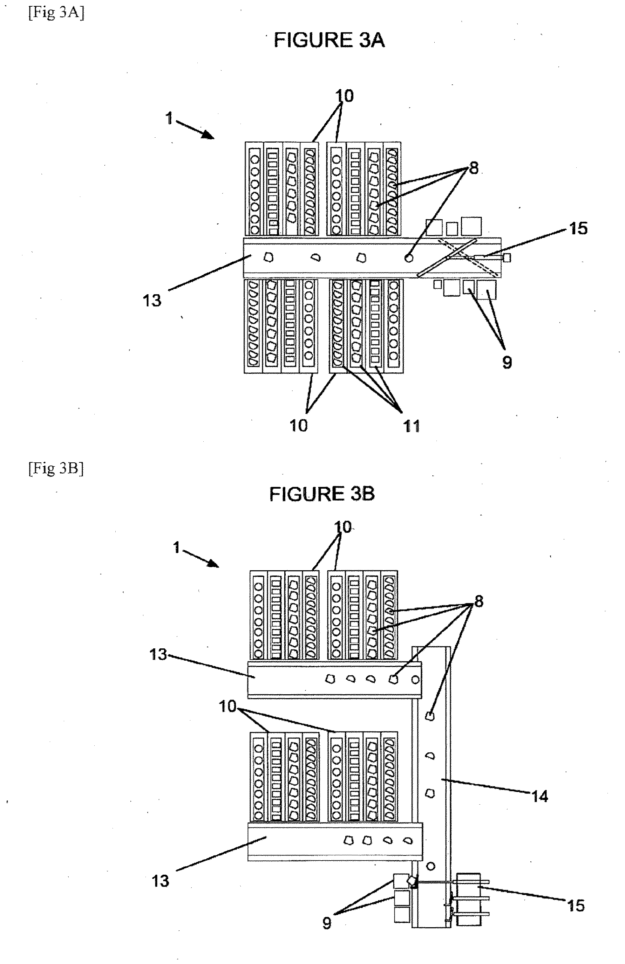

D'autre part, l'invention prévoit diverses variantes de réalisation en ce qui concerne les convoyeurs et l'aiguilleur, par exemple comme illustré sur les figures 2A, 2B, 3A et 3B, de manière illustrative et nullement limitative.

Dans certains modes de réalisation, l'aiguilleur (15) est :
- disposé en regard d'une pluralité d'emplacements de collecte dans chacun desquels est disposé un colis (9) apte à recevoir au moins un produit ;
- configuré pour pousser successivement les produits (8) sélectionnés d'une commande déterminée dans l'un des colis (9) de la pluralité d'emplacements et les produits (8) sélectionnés d'une autre commande déterminée dans un autre colis (9) de la pluralité d'emplacements.

Dans certains modes de réalisation, plusieurs armoires (10) délivrent les produits (8) sur un même convoyeur (13). Il peut s'agir d'un convoyeur unique sur lequel est disposé l'aiguilleur mais il peut s'agir de plusieurs convoyeurs convergeant vers un ou plusieurs aiguilleur(s). En effet, dans certains modes de réalisation, plusieurs convoyeurs (13), dits collecteurs, collectant les produits d'une ou plusieurs armoires (10), délivrent les produits (8) sur un convoyeur (14), dit distributeur, sur lequel est configuré ledit aiguilleur (15) permettant la convergence des produits (8) de plusieurs armoires (10) et de plusieurs convoyeurs (13) collecteurs vers au moins un colis (9) en regard d'un même aiguilleur (15).

Dans certains modes de réalisation, ledit aiguilleur (15) comporte un bras directionnel formant un plan d'aiguillage perpendiculaire au plan dudit convoyeur (13, 14), ledit plan d'aiguillage étant pivotant autour d'un axe perpendiculaire au plan dudit convoyeur (13, 14), grâce à une motorisation du bras directionnel, pour incliner le plan d'aiguillage d'un angle variable par rapport au sens d'avancement dudit convoyeur (13, 14) et ainsi pousser les produits vers divers emplacements de collecte en fonction de l'angle du plan d'aiguillage.

Dans certains modes de réalisation, par exemple comme illustré sur la figure 3A de manière illustrative et nullement limitative, ledit aiguilleur (15) comporte une seconde motorisation pour translater ledit plan d'aiguillage parallèlement au sens d'avancement dudit convoyeur (13, 14), ladite motorisation pour le pivotement du plan d'aiguillage étant configuré pour une pivotement de plus de quatre-vingt-dix degrés, permettant d'incliner le plan d'aiguillage alternativement vers un bord latéral ou l'autre dudit convoyeur, afin de pousser les produits (8) vers une pluralité d'emplacements de collecte situés de part et d'autre dudit convoyeur (13, 14).

Dans certains modes de réalisation, par exemple comme illustré sur la figure 3B de manière illustrative et nullement limitative, ledit aiguilleur (15) comporte une pluralité de moteurs translatant chacun une pelle (ou plaque ou autre) d'aiguillage perpendiculairement au sens d'avancement dudit convoyeur (13, 14), l'unité de contrôle pilotant l'actionnement de chacun de ces moteurs et pelles d'aiguillage disposés en regard chacun d'un emplacement de collecte des produits, pour pousser les produits successifs vers l'emplacement approprié par le moteur approprié. Le terme pelle est utilisé pour désigner le fait que le produit est poussé mais il n'implique aucune limitation sur la forme, de même que l'exemple de la figure 4 n'est pas limitatif en termes de structure.

L'homme de métier comprend de la présente demande que l'invention permet donc un colisage automatisé de commandes de produits à distance ou sur site. Divers modes de réalisation de l'interface homme-machine mise en oeuvre par au moins un logiciel exécuté des moyens informatiques, au moins de l'unité de contrôle (2) et éventuellement d'un serveur (4) et/ou d'un dispositif (3) d'un client, permettent la sélection de produits et un colisage automatique par le système. Ainsi, la présente demande concerne également un produit programme d'ordinateur pour le colisage automatisé de produits et un procédé mis en oeuvre par un tel programme d'ordinateur ou logiciel.

Dans certains modes de réalisation, par exemple comme représenté sur la Fig. 5B illustrative et non limitative, le procédé comporte au moins une sélection (41) d'au moins un produit (8) par un utilisateur via une interface homme-machine, suite à laquelle l'unité de contrôle (2) réalise au moins une itération de :
- une définition (42) d'au moins un emplacement de stockage correspondant à ladite sélection de produit(s) (8) ;
- un calcul (43) du volume et éventuellement du poids correspondant à ladite sélection de produit(s) (8) ;
- une définition (44) d'au moins une destination correspondant à au moins un emplacement de collecte capable d'accueillir ladite sélection de produit(s) (8) ;
- une définition (45) de l'acheminement nécessaire depuis chaque emplacement de stockage jusqu'à chaque emplacement de collecte pour chaque produit (8) de ladite sélection ;
- un pilotage des motorisations (12, 16) du système pour effectuer ledit acheminement.

Au cours du pilotage des motorisations, l'unité de contrôle (2) peut contrôler l'arrêt et l'avancement des divers moteurs, voire même piloter leur vitesse dans certains modes de réalisation. Ce pilotage est effectué grâce à l'enregistrement en mémoire de l'unité de contrôle, des divers chemins possibles depuis chaque emplacement de stockage jusqu'à chaque emplacement de collecte. De plus, ladite unité de contrôle (2) est configurée pour faire converger les chemins de divers produits (8) pour obtenir un acheminement optimal, notamment sans collisions et avec le moins d'étapes possibles. De plus, des capteurs de passage ou de présence peuvent être disposés à divers endroits, par exemple dans chaque rayon (de préférence à l'entrée et à la sortie, selon le sens de motorisation) et sur chaque convoyeur (13, 14), afin que l'unité de contrôle (2) surveille le bon acheminement des produits (8) et puisse détecter des défaillances (par exemple des chutes de produits, même si les convoyeurs sont généralement pourvus de barrières permettant de contenir les produits dans le bon chemin). Enfin, dans certains modes de réalisation, le logiciel exécuté par l'unité de contrôle (2) permet de réaliser un procédé d'achalandage dans lequel l'unité de contrôle pilote l'avancement pas à pas (emplacement par emplacement) des divers rayons (11) dans lesquels sont approvisionnés des produits (soit par un système automatisé, soit par un utilisateur autorisé), par exemple via des glissières comme dans l'exemple non limitatif de la fig. 5A. Ce pilotage est de préférence réalisé grâce à un capteur de passage ou de présence disposé à l'entrée de chacun des rayons, de sorte que l'arrivée d'un produit dans le rayon soit détectée et induise l'avancement de la motorisation (12) du rayon (11) afin de placer le produit sur un emplacement de stockage. L'unité de contrôle peut alors compter le nombre de produits approvisionnés et/ou détecter la présence d'un produit dans l'emplacement de stockage le plus proche de la sortie, afin d'indiquer que le rayon est plein et que l'achalandage peut être stoppé (par exemple par une lumière ou en fermant l'entrée de la glissière par une trappe motorisée). De plus, grâce au comptage des produits dans les rayons (par détection de présence ou de passage ou grâce à ce pilotage de l'achalandage), l'unité de contrôle détermine quels sont les emplacements occupés par un produit et les emplacements vides, ce qui lui permet de réaliser efficacement ladite définition (42) d'emplacement et par conséquent ladite définition (45) d'acheminement. On comprend donc que le procédé, par exemple mis en oeuvre sous la forme de programme d'ordinateur ou sous la forme d'un programme exécuté sur une carte dédiée de l'unité de contrôle (2), permet d'obtenir, par le contrôle de l'ensemble des éléments du système, des procédés de colisage automatisé (et de stockage de produits) efficaces, à faible coût grâce à la simplicité de l'ensemble. Le système et le procédé permettent donc, à partir d'une commande effectuée sur une interface homme-machine, de proposer aux utilisateurs une sélection de produits et de préparer automatiquement un ou plusieurs colis (9) contenant ces produits (8), en fonction du nombre et du volume des produits sélectionnés. On comprend que le système et le procédé pourront faire usage de divers emballages ou contenants (cartons, boites) de diverses tailles, disposés sur les emplacements de collecte et que l'unité de contrôle est configurée pour enregistrement en mémoire la contenance de ces emballages, afin de déterminer vers lesquels les produits doivent être acheminés. La résistance des emballages pourra également être prise en compte dans le cas d'un calcul de poids par l'unité de contrôle (2). De plus, l'unité de contrôle pourra utiliser des capteurs de passage ou de présence pour les emplacements de collecte, afin de vérifier la présence d'un contenant avant d'y acheminer des produits. De plus, on notera qu'un approvisionnement automatisé de contenants peut être prévu également, avec un actionnement d'un moteur amenant automatique un emballage ou contenant depuis une pile de stockage jusqu'à un emplacement de collecte, par exemple lorsqu'un colis a été terminé et enlevé (par un utilisateur ou par un autre convoyeur piloté) et que l'unité de contrôle est informée de l'enlèvement (par un capteur de passage ou de présence ou par l'utilisateur ou par l'avancement d'un convoyeur de collecte). On comprend ainsi également que l'ensemble du procédé peut être répété sur plusieurs niveaux, de manière fractale, avec plusieurs systèmes convergeant sur un autre système.

D'autre part, on comprend de la présente demande, d'après les exemples de configuration du système et du procédé, que certains modes de réalisation comprendront en fait plusieurs types de logiciels. Au moins un logiciel embarqué dans les cartes (Arduino par exemple) est capable d'interpréter des commandes sur le port série ou des commandes Ethernet. Le mode initial est généralement la communication série, mais il change automatiquement lorsque la carte programmable est flashée. Au lancement, ce logiciel va récupérer les versions de programmes à flasher dans la carte, l'utilisateur doit alors brancher sur le port série la carte puis sélectionner la version du programme à flasher, il configure également la partie Ethernet. Une fois flashée, la carte peut être débranchée du port série et fonctionne en mode Ethernet par la suite. Au moins un logiciel de gestion permet de fournir les fonctionnalités décrite dans le procédé. Il y a d'une part l'administration du réseau des cartes programmables et d'autre part l'administration des commandes afin de préparer les colis. Les fonctionnalités fournies sont alors par exemple :
Administration du parc des cartes programmables, avec :
   - Affectations des articles sur les tapis ;
   - Administration des éléments structurels (armoire, rayonnage, distributeurs etc..).
Gestion des articles
Gestion des inventaires
Gestion des commandes de colisage.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

### Liste détaillée des références dans les figures :

- 1: système de colisage
- 2: unité de contrôle
- 3: dispositif client
- 4: serveur
- 5: réseau de communication
- 8: produit
- 9: colis
- 10: armoire
- 11: rayon
- 12: motorisation rayon
- 13: convoyeur collecteur
- 14: convoyeur distributeur
- 15: aiguilleur
- 16: motorisation convoyeur
- 20: répartiteur
- 21: relais
- 22: contrôleur rayon
- 23: contrôleur réseau

## Revendications

1. Système de colisage pour la préparation automatisée de colis (9) à partir de produits (8) stockés dans un rayonnage comprenant au moins une armoire (10) de stockage,
**caractérisé en ce que** :
ladite armoire (10) comporte une pluralité de rayons (11) munis chacun d'une motorisation (12) et dans lesquels sont stockés lesdits produits (8), ladite motorisation (12) étant apte à délivrer les produits (8) un par un vers au moins un convoyeur (13, 14) muni d'une motorisation (16) acheminant les produits (8) récoltés sur le convoyeur (13, 14) vers un aiguilleur (15) apte à pousser les produits (8) successifs présents sur le convoyeur (13) vers au moins un colis (9) apte à recevoir lesdits produits,
ledit système comporte une unité de contrôle (2) configuré pour recevoir une commande d'un client identifiant une pluralité de produits sélectionnés parmi ceux stockés dans le système et contrôler, de manière combinée, les motorisations (12, 16) et l'aiguilleur (15) pour récupérer lesdits produits sélectionnés depuis leur emplacement de stockage dans les rayons (11) et les collecter dans au moins un colis (9).

2. Système selon la revendication 1, **caractérisé en ce que** l'aiguilleur (15) est :
- disposé en regard d'une pluralité d'emplacements de collecte dans chacun desquels est disposé un colis (9) apte à recevoir au moins un produit ;
- configuré pour pousser successivement les produits (8) sélectionnés d'une commande déterminée dans l'un des colis (9) de la pluralité d'emplacements et les produits (8) sélectionnés d'une autre commande déterminée dans un autre colis (9) de la pluralité d'emplacements.

3. Système selon la revendication 1 ou 2, **caractérisé en ce que** plusieurs armoires (10) délivrent les produits (8) sur un même convoyeur (13).

4. Système selon l'une quelconque des revendications 1 à 3, **caractérisé en ce que** plusieurs convoyeurs (13), dits collecteurs, collectant les produits d'une ou plusieurs armoires (10), délivrent les produits (8) sur un convoyeur (14), dit distributeur, sur lequel est configuré ledit aiguilleur (15) permettant la convergence des produits (8) de plusieurs armoires (10) et de plusieurs convoyeurs (13) collecteurs vers au moins un colis (9) en regard d'un même aiguilleur (15).

5. Système selon l'une quelconque des revendications 1 à 4, **caractérisé en ce que** ledit aiguilleur (15) comporte un bras directionnel formant un plan d'aiguillage perpendiculaire au plan dudit convoyeur (13, 14), ledit plan d'aiguillage étant pivotant autour d'un axe perpendiculaire au plan dudit convoyeur (13, 14), grâce à une motorisation du bras directionnel, pour incliner le plan d'aiguillage d'un angle variable par rapport au sens d'avancement dudit convoyeur (13, 14) et ainsi pousser les produits vers divers emplacements de collecte en fonction de l'angle du plan d'aiguillage.

6. Système selon l'une quelconque des revendications 1 à 5, **caractérisé en ce que** ledit aiguilleur (15) comporte une seconde motorisation pour translater ledit plan d'aiguillage parallèlement au sens d'avancement dudit convoyeur (13, 14), ladite motorisation pour le pivotement du plan d'aiguillage étant configuré pour une pivotement de plus de quatre-vingt-dix degrés, permettant d'incliner le plan d'aiguillage alternativement vers un bord latéral ou l'autre dudit convoyeur, afin de pousser les produits (8) vers une pluralité d'emplacements de collecte situés de part et d'autre dudit convoyeur (13, 14).

7. Système selon l'une quelconque des revendications 1 à 4, **caractérisé en ce que** ledit aiguilleur (15) comporte une pluralité de moteurs translatant chacun une pelle d'aiguillage perpendiculairement au sens d'avancement dudit convoyeur (13, 14), l'unité de contrôle pilotant l'actionnement de chacun de ces moteurs et pelles d'aiguillage disposés en regard chacun d'un emplacement de collecte des produits, pour pousser les produits successifs vers l'emplacement approprié par le moteur approprié.

8. Système selon l'une quelconque des revendications 1 à 7, **caractérisé en ce que** ladite unité de contrôle exécute un logiciel de commande de produits permettant à un client, via une interface homme-machine, de sélectionner une pluralité de produits à commander, ladite unité de contrôle déterminant, sur la base de cette commande de produits, les emplacements de stockage des produits, au moins un emplacement de collecte et la séquence d'actionnement des motorisations (12, 16) et de l'aiguilleur (15) pour l'acheminement des divers produits (8) vers au moins un colis (9).

9. Système selon la revendication 8, **caractérisé en ce que** l'interface homme machine est exécutée sur un dispositif (3) informatique du client, connecté à ladite unité de contrôle (2) par un réseau (5) de communication.

10. Système selon la revendication 8, **caractérisé en ce que** l'interface homme machine est réalisée par la coopération entre au moins un dispositif (3) informatique du client et au moins un serveur (4), via au moins un réseau (5) de communication, ledit serveur (4) communiquant également avec ladite unité de contrôle (2) pour lui transmettre la commande demandée par le client.

11. Procédé de colisage pour la préparation automatisée de colis (9) à partir de produits (8) stockés dans un système selon l'une quelconque des revendications 1 à 10, **caractérisé en ce qu'**il comporte au moins une sélection (41) d'au moins un produit (8) par un utilisateur via une interface homme-machine, suite à laquelle l'unité de contrôle (2) réalise au moins une itération de :
- définition (42) d'au moins un emplacement de stockage correspondant à ladite sélection de produit(s) (8) ;
- calcul (43) du volume et éventuellement du poids correspondant à ladite sélection de produit(s) (8) ;
- définition (44) d'au moins une destination correspondant à au moins un emplacement de collecte capable d'accueillir ladite sélection de produit(s) (8) ;
- définition (45) de l'acheminement nécessaire depuis chaque emplacement de stockage jusqu'à chaque emplacement de collecte pour chaque produit (8) de ladite sélection ;
- pilotage des motorisations (12, 16) du système pour effectuer ledit acheminement.

12. Programme d'ordinateur pour le colisage automatisé, caractérisé que son **caractérisé en ce que** son exécution sur des moyens informatiques d'un système selon l'une quelconque des revendications 1 à 10 permette la mise en oeuvre du procédé de colisage selon la revendication 11.
